Europäisches Patentamt

European Patent Office

Office européen des brevets

(19)

(11)  EP 0 856 784 B1

(12)  **EUROPÄISCHE PATENTSCHRIFT**

(45) Veröffentlichungstag und Bekanntmachung des Hinweises auf die Patenterteilung:
**08.08.2001   Patentblatt 2001/32**

(51) Int Cl.⁷: **G05D 1/08**, G01C 21/24, B64G 1/34, B64G 1/36

(21) Anmeldenummer: **98101642.1**

(22) Anmeldetag: **30.01.1998**

(54) **Verfahren und Vorrichtung zur bordautonomen Bestimmung der Position eines Satelliten**

Method and device for the on-board determination of a satellite s position

Méthode et dispositif pour la détermination de la position d'un satellite à bord

(84) Benannte Vertragsstaaten:
**DE FR GB IT**

(30) Priorität: **31.01.1997   DE 19703629**

(43) Veröffentlichungstag der Anmeldung:
**05.08.1998   Patentblatt 1998/32**

(73) Patentinhaber: **Astrium GmbH**
**81663 München (DE)**

(72) Erfinder:
• **Surauer, Michael, Dipl.-Ing.**
**83339 Chieming (DE)**
• **Fichter, Walter, Dipl.-Ing.**
**81731 München (DE)**

• **Juckenhöfel, Oliver, Dipl.-Ing.**
**80469 München (DE)**

(74) Vertreter: **Ulrich, Thomas et al**
**EADS Deutschland GmbH,**
**Intellectual Property Management,**
**Postfach 80 11 09**
**81663 München (DE)**

(56) Entgegenhaltungen:
**EP-A- 0 174 715         EP-A- 0 748 737**
**DE-A- 4 129 630         US-A- 4 786 018**
**US-A- 5 108 050         US-A- 5 259 577**
**US-A- 5 412 574**

EP 0 856 784 B1

**Beschreibung**

**1. Einleitung, Stand der Technik**

Die Positionsbestimmung und Positionshaltung eines Satelliten erfolgt üblicherweise nicht automatisch und nicht autonom, d.h. die Bodenstation ermittelt die Abweichung der tatsächlichen Bahn von der Sollbahn und die entsprechenden Korrekturmanöver werden dann manuell vom Boden aus kommandiert.

Aus Gründen der Kostenersparnis kann es günstig sein, die Aufgaben "Bahnbestimmung" und "Bahnkorrektur" bordautonom, das heißt ohne Eingriff der Bodenstation durchzuführen. In einer Reihe von Veröffentlichungen [1], [2] sind Ergebnisse von Untersuchungen verschiedenster Verfahren zur bordseitigen Ermittlung der Bahnparameter und deren Korrektur, weitgehend unabhängig von Eingriffen der Bodenstation beschrieben. Die meisten Einrichtungen dieser Art benötigen außer den ohnehin an Bord solcher Fahrzeuge zum Zwecke der Lageregelung verfügbaren Meßgeräten, insbesondere Erd- und Sonnensensoren zusätzliche, ausschließlich oder zumindest vorwiegend dem Zweck der Bahnparameterbestimmung dienende Meßwertgeber. Vor allem der Einsatz zusätzlicher Sternsensoren hat sich dafür als vorteilhaft erwiesen.

Eine Ausnahme ist in Ref [3] gegeben. Dort wird angegeben, daß mit Hilfe eines zweiachsig messenden Erdsensors, eines zweiachsigen Sonnensensors und eines Kalman-Filters die Satellitenbahn vollständig ermittelt werden kann. Der Sonnensensor ist dabei auf den Antrieb des Solargenerators montiert, so daß die Sensormessungen bei bekannter Lage des Antriebs in das körperfeste Koordinatensystem transformiert werden können.

Hingewiesen wird auch auf die Druckschrift US 5,108,050.

**2. Nachteile bekannter Verfahren und Vorrichtungen**

Nachteile der bekannten Verfahren und Vorrichtungen zur autonomen Bahnbestimmung sind:

- Der Einbau zusätzlicher Meßglieder, insbesondere Sternsensoren verursacht zusätzliche Kosten, Gewicht und Komplexität des Meßsystems.
- Im Fall eines Polarissensors entstehen systemtechnische Schwierigkeiten, da aufgrund von Sonnenreflektionen an den Solargeneratoren Streulichtabschirmungen angebracht werden müssen, die außerdem zusätzliches Gewicht bedeuten.
- Die Verwendung eines auf dem Antrieb des Solargenerators montierten Sonnensensors setzt voraus, daß die Winkellage des Antriebsmotors bezüglich des Satelliten genau bekannt ist, um die Meßinformation in das körperfeste Satellitensystem zu transformieren. Dies kann bei üblichen Antriebsmotoren (Steppermotoren) im allgemeinen jedoch nicht mit hinreichender Genauigkeit garantiert werden.
- Es läßt sich zeigen, daß mit einer jeweils zweiachsigen Erd- und Sonnensensormessung die komplette Bahninformation nicht ermittelt werden kann. Die in Ref. [3] dargestellten Ergebnisse sind also nur teilweise gültig.

**3. Aufgabe der Erfindung**

Der Erfindung liegt die Aufgabe zugrunde, unter Verwendung der ohnehin an Bord des Satelliten befindlichen Sensoren (zweiachsig messende Erd- und Sonnensensoren) die Bahn (Position) des Satelliten so weit als möglich bordautonom zu bestimmen, um mit Hilfe dieser Bahninformation optimale Korrekturmanöver durchführen zu können. Es wird im folgenden davon ausgegangen, daß sowohl Erdsensor als auch Sonnensensor Richtungsvektoren der Länge 1 in Richtung des Erdmittelpunktes bzw. in Richtung der Sonne liefern. Die Richtungsmessungen sind durch Sensorfehler, Einbaufehler der Sensoren, sowie relative Lagefehler der Sensoren aufgrund von Thermalverformungen der Satellitenstruktur gestört. Die Aufgabe der Erfindung erstreckt sich daher auch darauf, Verfahren zur Identifikation und Elimination solcher Fehlereinflüsse anzugeben.

**4. Technische Beschreibung**

**4.1 Bahnbewegung des Satelliten**

Nach den technischen Anforderungen an die Positionshaltungsgenauigkeit von geosynchronen Satelliten dürfen Abweichungen von der Sollposition in Ost/West- und Nord/Süd-Richtung Werte von $\pm0.05$deg bis $\pm0.1$deg nicht überschreiten. Aufgrund dieser kleinen Abweichungen kann die Bahnbewegung mit guter Genauigkeit bezüglich der idealen geostationären Kreisbahn linearisiert werden, das heißt es wird die Relativbewegung bezüglich dieser Bahn dargestellt. Diese Bewegungsgleichungen sind als Hill-Gleichungen bekannt und in der Literatur beschrieben. Das homogene (ungestörte) System ist gegeben durch

$$\ddot{x}_{hill} - 2n\dot{z}_{hill} = 0$$

$$\ddot{y}_{hill} + n^2 y_{hill} = 0 \qquad\qquad (4.1)$$

$$\ddot{z}_{hill} + 2n\dot{x}_{hill} - 3n^2 z_{hill} = 0$$

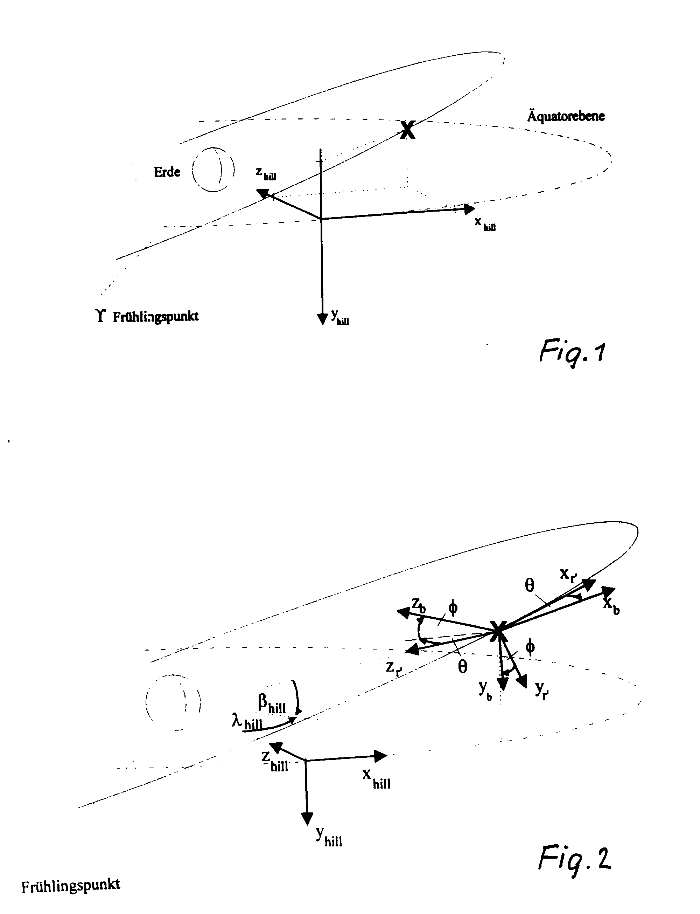

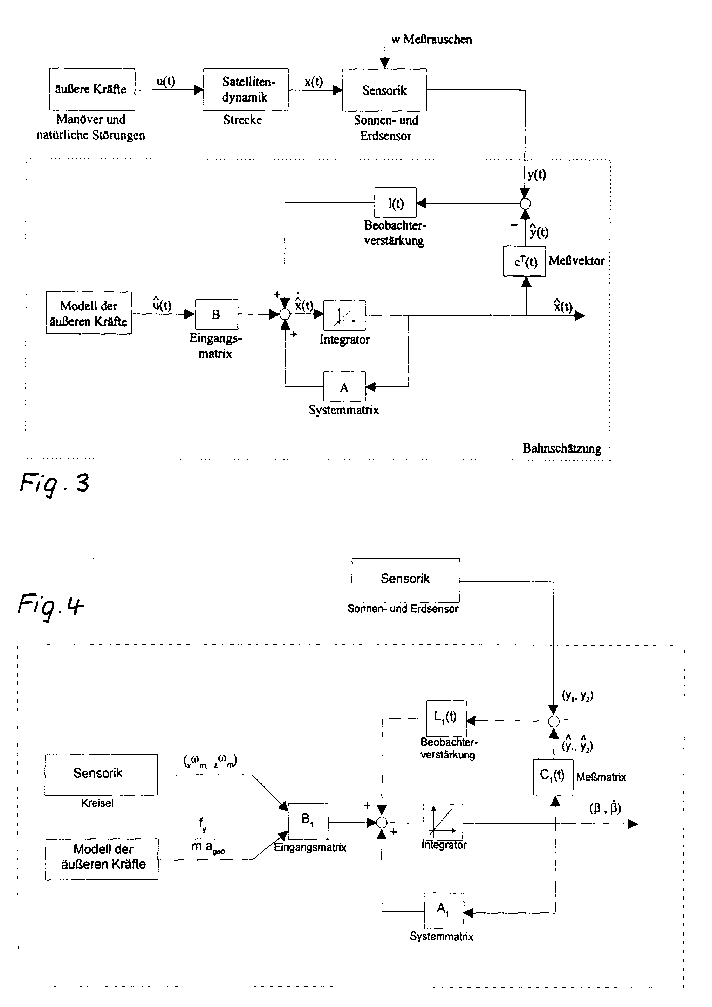

wobei das Koordinatensystem gemäß Fig. 1 zugrunde gelegt wird und $n$ die Umlaufgeschwindigkeit des Satelliten bezeichnet. Die x-Achse zeigt in Flugrichtung, die y-Achse liegt parallel zum Bahndrallvektor mit entgegengesetzter Orientierung und die z-Achse zeigt zum Erdmittelpunkt.

Zur Darstellung in Längenabweichung $\lambda_{hill}$, Breitenabweichung $\beta_{hill}$ und radialer Abweichung $r_{hill}$ kann folgende Näherung für kleine Größen benutzt werden:

$$\lambda_{hill} = \lambda - \lambda_{nom} \approx \frac{x_{hill}}{a_{geo}}$$

$$\beta_{hill} = \beta_{nom} - \beta \approx \frac{y_{hill}}{a_{geo}} \qquad\qquad (4.2)$$

$$r_{hill} = \frac{a_{geo} - r}{a_{geo}} \approx \frac{z_{hill}}{a_{geo}}$$

$a_{geo}$ bezeichnet den Radius der idealen geostationären Bahn. Damit erhält man das ungestörte System:

$$\ddot{\lambda}_{hill} - 2n\dot{r}_{hill} = 0$$

$$\ddot{\beta}_{hill} + n^2\beta_{hill} = 0 \qquad\qquad (4.3)$$

$$\ddot{r}_{hill} + 2n\dot{\lambda}_{hill} - 3n^2 r_{hill} = 0$$

Durch die Linearisierung sind die In-Plane und die Out-of-Plane Bewegung entkoppelt und können somit getrennt behandelt werden. Da alle Koeffizienten konstant sind, ist die Dynamik des ungestörten Systems zeitinvariant. Störungen werden in diesem System als inhomogene Anteile modelliert. Es ergibt sich dann folgendes inhomogenes Differentialgleichungssystem als Modell für die Bahnbewegung:

$$\ddot{\lambda}_{hill} - 2n\,\dot{r}_{hill} = \frac{f_x}{ma_{geo}}$$

$$\ddot{\beta}_{hill} + n^2\beta_{hill} = \frac{f_y}{ma_{geo}} \qquad\qquad (4.4)$$

$$\ddot{r}_{hill} + 2n\,\dot{\lambda}_{hill} - 3n^2 r_{hill} = \frac{f_z}{ma_{geo}}$$

Die Differentialgleichungen zweiter Ordnung können mit der üblichen Zustandsraumdarstellung beschrieben werden:

$$\dot{\bar{x}}_{hill} = A\,\bar{x}_{hill} + B\,\bar{u} \qquad\qquad (4.5)$$

Dabei bietet sich durch die Entkopplung der Nord-Süd Bewegung (out-of-plane) von der Ost-West Bewegung (in-plane) folgende Anordnung der Positions- und Geschwindigkeitskoordinaten im Zustandsvektor $\bar{x}$ an:

$$\bar{x}_{hill} = \begin{pmatrix} \beta_{hill} & \dot{\beta}_{hill} & \lambda_{hill} & r_{hill} & \dot{\lambda}_{hill} & \dot{r}_{hill} \end{pmatrix}^T \qquad (4.6)$$

Die Dynamikmatrix A und die Eingangsmatrix B haben die Gestalt

$$A = \begin{pmatrix} 0 & 1 & 0 & 0 & 0 & 0 \\ -n^2 & 0 & 0 & 0 & 0 & 0 \\ 0 & 0 & 0 & 0 & 1 & 0 \\ 0 & 0 & 0 & 0 & 0 & 1 \\ 0 & 0 & 0 & 0 & 0 & 2n \\ 0 & 0 & 0 & 3n^2 & -2n & 0 \end{pmatrix} \qquad B = \begin{pmatrix} 0 & 0 & 0 \\ 0 & 1 & 0 \\ 0 & 0 & 0 \\ 0 & 0 & 0 \\ 1 & 0 & 0 \\ 0 & 0 & 1 \end{pmatrix} \qquad (4.7)$$

Der Vektor $\bar{u}$ wird auch als Eingangsvektor bezeichnet, er beinhaltet die inhomogenen Störterme (natürliche Störbeschleunigungen und Manöverbeschleunigungn) des Systems (4.4):

$$\bar{u} = \begin{pmatrix} \dfrac{f_x}{m\,a_{geo}} & \dfrac{f_y}{m\,a_{geo}} & \dfrac{f_z}{m\,a_{geo}} \end{pmatrix}^T \qquad (4.8)$$

Die Dynamik der Nord-Süd Bewegung entspricht der eines Schwingers zweiter Ordnung mit der Eigenfrequenz $n$ (komplexes Polpaar auf der imaginären Achse der Laplace-Ebene). Die Ost-West Dynamik enthält zusätzlich integrale Anteile (doppelter Pol im Ursprung der Laplace Ebene). Dies bedeutet, daß auch bei kleinen Fehlern im Anfangszustand die Fehler bei einer reinen Propagation zeitlich anwachsen.

4.2 Bewegung der Sonne

Die inertiale Sonnenrichtung darf dabei über einen Orbit (bei geosynchronen Satelliten also einen Tag) in guter Näherung als inertial konstant angesehen werden. Es gilt:

$$s_{rx} = -\sqrt{1 - s_{ry}^2}\,\sin(n(t - t_{s0})) \qquad (4.9)$$

$$s_{ry} = const. \qquad (4.10)$$

mit

$t_{s0}$    Zeitpunkt zu dem der Satellit in Sonnenrichtung steht, $\alpha = \alpha_s$ (von der Erde aus gesehen).

Die Sonnenvektorkomponente $s_{ry}$ ändert sich jahreszeitlich zwischen $-\sin(23.4deg)$ und $+\sin(23.4deg)$.

4.3 Instrumentierung und Messung

Es stehen zwei Sensoren zur Verfügung:

- Ein 2-achsig messender Erdsensor, der entlang der Satelliten z-Achse ausgerichtet ist und Informationen über Roll- und Nickwinkel $(\phi, \theta)$ des Satelliten liefert.

- Ein 2-achsiger Sonnensensor, bestehend aus mehreren Sensorköpfen die in der Satelliten x/z-Ebene so angebracht sind, daß außer im Erdschatten während der gesamten nominalen Betriebszeit des Satelliten die Richtung der Sonne in Form eines Einheitsvektors $s_b$ gemessen werden kann.

Weiterhin steht

- ein Bordrechner zur Ausführung der nachfolgend beschriebenen Verfahren, sowie
- eine genaue Borduhr

zur Verfügung.

Zur Bestimmung der Meßgleichung werden neben dem oben eingeführten Referenzsystem zwei weitere Koordinatensysteme definiert: ein satellitenfestes und damit lageabhängiges System mit Ursprung in der momentanen Position des Satelliten und ein bahnfestes System, dessen Ursprung ebenfalls in der momentanen Satellitenposition liegt. Die Orientierung der Achsen ist in Fig. 2 anschaulich dargestellt.

Im Idealfall des lage- und bahngeregelten Satelliten gehen die Koordinatensysteme in das Referenzsystem über. Bei nur kleinen Abweichungen in Lage und Position vom Sollzustand gelten für die Darstellung eines beliebigen Richtungsvektors in den drei Systemen folgende Beziehungen:

$$\vec{s}_b = \left(E - \widetilde{\varphi}\right) \vec{s}_{r'} \tag{4.11}$$

$$\vec{s}_{r'} = \left(E + \widetilde{e}_x \beta_{hill} + \widetilde{e}_y \lambda_{hill}\right) \vec{s}_r \tag{4.12}$$

mit

$\vec{s}_b$:     Sonnenvektor gemessen im körperfesten System
$\vec{s}_{r'}$:     Sonnenvektor im ideal lagegeregelten System
$\vec{s}_r$:     Sonnenvektor im Referenzsystem

$\vec{\varphi} = (\phi\ \theta\ \psi)^T$ Lagevektor (Roll-, Nick-, Gierwinkel)

$e_x = (100)^T$, $e_y = (010)^T$

Das Symbol '~' bezeichnet eine Kreuzproduktmatrix.

Berücksichtigt man noch, daß aus der Messung des Erdsensors Informationen über den Rollwinkel $\phi$ und den Nickwinkel $\theta$ des Satelliten vorliegen und spaltet dem entsprechend die Gleichung in bekannte und unbekannte Anteile auf, so ergibt sich folgendes Resultat:

$$\underbrace{\vec{s}_b - \left(E - \widetilde{\varphi}_{12}\right) \vec{s}_r}_{\text{meßbar}} = \underbrace{\left(\widetilde{e}_x \beta_{hill} + \widetilde{e}_y \lambda_{hill} - \widetilde{e}_z \psi\right) \vec{s}_r}_{\text{unbekannt}} \tag{4.13}$$

mit

$$\widetilde{\varphi}_{12} = \widetilde{\varphi} - \widetilde{e}_z \psi$$

Messung des Erdsensors

Man kann mit einigen Umformungen zeigen, daß Gleichung (4.13) einem System aus zwei Gleichungen für drei Unbekannte ($\lambda_{hill}$, $\beta_{hill}$, $\psi$) entspricht und folglich nicht lösbar ist.

Um den unbekannten Gierlagewinkel $\psi$ aus (4.13) zu eliminieren, wird die Gleichung von links mit dem Einheitsvektor $\bar{e}_z^T$ multipliziert. Das Resultat ist die dritte Zeile der Gleichung (4.13), d.h. eine skalare Gleichung in Abhängigkeit der Größen $\lambda_{hill}$ und $\beta_{hill}$:

$$y = \bar{e}_z^{\ T}\left[\bar{s}_b - \left(E - \widetilde{\varphi}_{12}\right)\bar{s}_r\right] = \begin{pmatrix} e_z^{\ T}\widetilde{e}_x\bar{s}_r & e_z^{\ T}\widetilde{e}_y\bar{s}_r \end{pmatrix}\begin{pmatrix} \beta_{hill} \\ \lambda_{hill} \end{pmatrix} \qquad (4.14)$$

Es läßt sich zeigen, daß diese Messung bis auf Größen zweiter Ordnung dem folgenden Ausdruck entspricht:

$$\begin{aligned} y &= \bar{e}_b^{\ T}\bar{s}_b - \bar{e}_r^{\ T}\bar{s}_r \\ &= \cos\gamma - \cos\gamma_0 \end{aligned} \qquad (4.15)$$

mit

$\gamma$:  Winkel zwischen Sonnenrichtung und Erdrichtung.

$\gamma_0$:  Referenzwinkel, bei Lageabweichung null.

Die Meßgröße y entspricht also der Differenz von nominalen und tatsächlichen Winkel zwischen Sonnen- und Erdrichtung und ist daher nicht mehr abhängig von der Lage des Satelliten (vgl. [3]).

Stellt man die Gleichung (4.14) nun in Abhängigkeit der Komponenten des Sonnenvektors im bahnfesten Referenzsystem dar, so folgt:

$$y = \underbrace{\begin{pmatrix} s_{ry} & 0 & -s_{rx}(t) & 0 & 0 & 0 \end{pmatrix}}_{\bar{c}^T}\bar{x}_{hill} \qquad (4.16)$$

Mit Hilfe des mittleren Ausdrucks in Gleichung (4.14) wird die Meßgröße y berechnet. Die Werte von $S_b$ und $\varphi_{12}$ werden von den Sensoren geliefert, die Komponenten von $s_r$ können leicht an Bord des Satelliten berechnet werden, da die Sonnenbewegung bekannt ist (Modell im Bordrechner) und eine Borduhr zur Verfügung steht.

### 4.4 Bahnschätzung

In der Meßgröße y sind sowohl Informationen der out-of-plane Bewegung, als auch der in-plane Bewegung enthalten. Allerdings sind diese Informationen nicht unabhängig voneinander. Befindet sich z.B. der Satellit auf einer geosynchronen Bahn, jedoch um einen konstanten Fehler $\Delta\lambda$ neben der gewünschten Position, so äußert sich dieser Fehler in der Meßgröße mit einer sinusförmigen Schwingung mit Orbitfrequenz, da $s_{rx}(t)$ diesen Verlauf besitzt. Liegt gleichzeitig eine out-of-plane Abweichung vor (ebenfalls sinusförmig mit Orbitfrequenz), so ergibt sich als Meßgröße y wiederum eine sinusförmige Schwingung mit Orbitfrequenz. Beide Bahnbewegungen, d.h. out-of-plane und in-plane Bewegung haben also dieselbe Auswirkung auf die Messung, mit anderen Worten: das gesamte System (in-plane und out-of-plane Bewegung) ist mit der gegebenen Meßkonfiguration nicht beobachtbar, bei alleiniger Kenntnis der Meßgröße kann man nicht auf die Verläufe der in-plane und out-of-plane Bewegung schließen. Diese Tatsache läßt sich auch auf strenge mathematische Weise zeigen. Jedoch ist ein Teilsystem, d.h. entweder die in-plane Bewegung oder die out-of-plane Bewegung bei Kenntnis des Zustandes der jeweils anderen Bewegung beobachtbar. Im Rahmen dieser Erfindung wird so verfahren, daß nur die in-plane Bewegung beobachtet, d.h. mit Meßdaten gestützt wird. Die out-of-plane Bewegung wird lediglich propagiert. Diese Aufteilung wird aus zwei Gründen durchgeführt:

- Die in-plane Bewegung läßt sich schlechter propagieren als die out-of-plane Bewegung, da Anfangsfehler der Drift zu zeitlich anwachsenden Fehlern in der Länge führen.
- Die äußere Kraft der out-of-plane Bewegung ist bei geosynchronen Satelliten im wesentlichen gegeben durch die Gravitationskraft von Sonne und Mond. Diese ist relativ genau bekannt. Bei der in-plane Bewegung ist der dominante Krafteinfluß durch den Solardruck gegeben. Dieser ist relativ ungenau bekannt.

Fig.3 zeigt den Aufbau des Funktionsblockes Bahnschätzung. Dieser Funktionsblock besteht aus den folgenden Unterblöcken:

1. Modell der äußeren Kräfte. Hierzu gehören natürliche Störungen und Manöver. Natürliche Störungen sind z.B. Dreiachsigkeit der Erde, die Gravitation von Sonne und Mond, Solardruck, Luftwiderstand etc.. Manöver werden zur Positionshaltung durchgeführt.

2. Ein Modell der Bahndynamik des Satelliten, gegeben durch die Matrizen A und B, oder äquivalente Darstellungen.

3. Ein Modell der Meßinformation, gegeben durch den Meßvektor c.

4. Ein Verstärkungsvektor 1, gegeben durch

$$\vec{l}(t) = \begin{pmatrix} 0 \\ 0 \\ l_3 \\ l_4 \\ l_5 \\ l_6 \end{pmatrix} \sin(\alpha - \alpha_s) \qquad (4.17).$$

Die ersten zwei Komponenten der (6x1) Beobachterverstärkung 1(t) sind identisch null, was der reinen Propagation der out-of-plane Bewegung entspricht. Den konstanten Faktoren $1_i$, i=3(1)6 wird ein zeitlich sinusförmiger Verlauf aufgeprägt. Durch die Wahl der $1_i$, i=3(1)6 kann das Einschwingverhalten des Schätzfehlers beeinflußt werden.

Statt des in Abb. 3 gezeigten zeitvarianten Beobachters kann auch z.B. ein Kalman-Filter verwendet werden. Wichtig ist allerdings auch hier, daß das Filter nur für eine Bewegung (normalerweise in-plane) angewendet wird und die zweite Bewegung (normalerweise out-of-plane) propagiert wird.

**4.5 Kalibrierung**

Das oben beschriebene Verfahren zur Bahnschätzung benötigt Meßinformationen vom Erdsensor und Sonnensensor. Beide Meßinformationen müssen aufeinander abgestimmt sein, d.h. die relative Lage dieser Sensoren muß genau bekannt sein. Aufgrund von Sensorungenauigkeiten, Einbaufehlern der Sensoren, sowie aufgrund der unterschiedlichen Einbauorte der Sensoren an der Satellitenstruktur und deren Thermalverformungen ist dies in der Realität nicht der Fall. Diese zeitlich veränderliche Ungenauigkeit muß daher durch Kalibrierung ermittelt und damit die Meßgröße korrigiert werden. Zur Kalibrierung wird die Kenntnis der Satellitenbahn vorausgesetzt. Dies wird dadurch realisiert, daß vor der Kalibrierung die Bahn von der Bodenstation aus vermessen wird. Da die Ungenauigkeiten durch Thermaleffekte von der Sonneneinfallsrichtung im Satelliten abhängig sind, unterliegen sie im Fall von geostationären Satelliten sowohl tageszeitlichen als auch jahreszeitlichen Schwankungen.

Betrachtet man den Erdsensor als Referenz und die Einbaurichtungen der Sonnensensormeßköpfe als fehlerbehaftet, so gilt für die Sonnenvektormessung $s_{bm}$

$$s_{bm} = \left[ E - \widetilde{\delta} \right] s_b \qquad (4.18)$$

mit einer zeitlich abhängigen Verdrehung $\delta(t)$, die zunächst unbekannt ist. Statt der Meßgleichung (4.14) erhält man dann die folgende Meßgleichung

$$y = \underbrace{-e_z{}^T \widetilde{\delta} s_r}_{k(t)} + e_z{}^T \widetilde{e}_x s_r \beta_{hill} + e_z{}^T \widetilde{e}_y s_r \lambda_{hill} \qquad (4.19)$$

Der erste Term der rechten Seite ist die zu ermittelnde Kalibrierungsfunktion, abgekürzt k(t).

Man erkennt hier, daß die Satellitenbahn (Winkel $\beta$ und $\lambda$) bekannt sein muß, um k(t) mit Hilfe der Gleichung (4.19) bestimmen zu können. Die Kalibrierungsfunktion k(t) wird für einen Bahnumlauf bestimmt. Im Fall eines geostationären Satelliten entspricht dies einem Tag. Wegen der Degradation und der jahreszeitlichen Schwankungen der Thermalverformungen sollte die Kalibrierung ca. alle 3 Monate wiederholt werden.

Zur Bestimmung des Verlaufes von k(t) werden Datensätze mit möglichst hoher Abtastrate (an möglichst vielen Stützpunkten) aufgezeichnet. Die aufgezeichneten Daten werden dann gefiltert (geglättet), anschließend wird der Verlauf von k(t) approximiert, z.B. mit Hilfe von Polynomen oder Spline-Funktionen, um den zur Beschreibung von k(t) notwendigen Datenumfang zu reduzieren. Die Bestimmung von k(t) kann entweder an Bord des Satelliten oder am Boden durchgeführt werden.

**4.6 Gesamtverfahren**

Das Gesamtvorgehen zur Ermittlung der Satellitenbahn besteht aus zwei alternierenden Schritten. (Phase1, Phase2). Mit Hilfe der in diesen beiden Betriebsphasen erhaltenen Information können dann in einem dritten Schritt (Phase 3) Bahnkorrekturmanöver autonom und treibstoffoptimal durchgeführt werden.

**1. Kalibrierung der Sensoren und Aktualisierung der Bahnparameter/Satellitenbahn (Phase 1)**

Zur Kalibrierung der Sensoren und zur Initialisierung (Aktualisierung) der Bahnparameter (Zustand der Satellitenbahn) wird zunächst die Satellitenbahn von der Bodestation aus sehr genau vermessen. Anschließend werden diese Daten mittels Telekommando in den Bordrechner geladen. Die notwendigen Berechnungen zur Kalibrierung können entweder am Boden oder auch im Bordrechner durchgeführt werden.

**2. Autonome Bahnprädiktion und Bahnschätzung (Phase 2)**

Unter Ausnutzung des in Phase 1 berechneten Fehlermodells wird die in-plane Bewegung der Satellitenbahn gemäß Kapitel 4.4 geschätzt. Die out-of-plane Bewegung wird propagiert.

**3. Autonome Durchführung der Bahnkorrekturmanöver (Phase 3)**

Die Strategie zur Durchführung der Bahnkorrekturmanöver wird bezüglich Positionsgenauigkeit und Treibstoffverbrauch des Gesamtsystems Satellit (inklusive Lageregelung) optimiert. Zur Überwachung der bordseitigen Berechnungen werden die Daten der geschätzten Bahnparameter kontinuierlich über die Telemetrie zur Bodestation geschickt, die diese automatisch mit ihren eigenen Schätzungen der Satellitenbahn überprüft. Bei einer zu großen Abweichung der an Bord geschätzten Bahn von der am Boden ermittelten Bahn wird die autonome Durchführung der Bahnkorrekturmanöver durch ein einfaches Telekommando gestoppt. Danach wird das Bahnmodell an Bord durch Telekommandos aktualisiert (Phase 1).

Im folgenden sind die wichtigsten Merkmale des Verfahrens und der Vorrichtung zusammengefaßt:

1. Die Vorrichtung besteht aus einem zweiachsig messenden Erdsensor, der die z-Achse (Gierachse) des Satelliten definiert und mehreren zweiachsig messenden Sonnensensor-Meßköpfen, die an der Satellitenstruktur so angeordnet sind, daß sie außer in Erdschattenphasen eine Richtungsvektormessung liefern.

2. Die out-of-plane Bewegung des Satelliten wird mit Hilfe eines genauen Modells der Satellitendynamik, einschließlich natürlicher Störkräfte und Schubkräfte bei Manövern an Bord propagiert.

3. Um Sensorunsicherheiten und Einflüsse von Thermalverformungen zu kompensieren wird die Satellitenbahn in regelmäßigen Abständen (ca. 3 Monate) genau vermessen. Mit Hilfe dieser Information wird eine Kalibrierungsfunktion (Zeitfunktion über einen Tag) ermittelt, mit der die Meßwerte kompensiert werden.

4. Die in-plane Bewegung wird nicht nur propagiert, sondern die Propagation wird durch Meßdaten gestützt (Schätzung). Hierbei wird sowohl der Einfluß der out-of-plane Bewegung als auch der Thermalverformungen berücksichtigt. Dies erfolgt mittels der Daten der Kalibrierungfunktion k(t) beziehungsweise der propagierten out-of-plane Bewegung.

5. Es besteht die Möglichkeit für die Bodenstation, die automatische und autonome Bahnbestimmung und Positionshaltung abzuschalten, sobald während der autonomen Betriebsphase größere Abweichungen zwischen der bordautonom berechneten Position und der (passiv) von der Bodenstation überwachten Position auftreten.

**Alternativer Einsatz von Kreiseln**

**A1. Bisher beschriebenes Verfahren**

Das bisher in den Patentansprüchen beschriebene Verfahren verwendet ausschließlich eine skalare, lageunabhängige Messung der Erd/Sonnensensor Konfiguration. Diese Messung setzt sich anteilsmäßig aus der geographischen Länge $\lambda$ (Ost/West Bewegung) und Breite $\beta$ (Nord/Süd Bewegung) des Satelliten bzw. deren Abweichung $\lambda_{hill}$, $\beta_{hill}$ von den nominalen Werten zusammen (siehe Gleichungen 4.14 - 4.15):

$$y = s_{ry}\, \beta_{hill} - s_{rx}\, \lambda_{hill} \tag{A1.1}$$

$s_{rx}$, $s_{ry}$: siehe Abschnitt 4.2, "Bewegung der Sonne".

Aufgrund der besonderen Verknüpfung dieser Größen in den Meßwerten und in der Bahndynamik des Satelliten, lassen sich die Länge und Breite des Satelliten nicht gleichzeitig anhand der Messungen bestimmen (Stichwort: Das System ist nicht vollständig beobachtbar).

Eine der beiden Größen muß mit anderen Mitteln vorgegeben werden (z.B. die geographische Breite $\beta$), dann liefert die Sensorkonfiguration direkte Messungen der anderen Größe ( z.B. der geographischen Länge $\lambda$):

$$m = \underbrace{y - s_{ry}\, \beta_{hill}}_{bekannt} = -s_{rx}\, \lambda_{hill} \tag{A1.2}$$

Aufbauend auf dieser Gleichung ist in den Patentansprüchen ein Beobachter beschrieben, mit dem nun die geographische Länge des Satelliten bestimmt werden kann.

Im bisher beschriebenen Verfahren wird auch ein Weg angegeben, wie die geographische Breite des Satelliten vorgegeben werden kann (Dies war die Voraussetzung für die Gültigkeit der Meßgleichung A1.2):

Aufgrund der besonderen dynamischen Eigenschaften der Nord/Süd Bewegung und der hohen Qualität der Modellierung der die Bewegung beeinflussenden Störungen, läßt sich die geographische Breite des Satelliten mit sehr guter Genauigkeit voraussagen (Stichwort: Propagation). Dazu muß die geographische Breite nur einmal zu Beginn der Autonomiephase bekannt sein (z.B. durch Vermessung von Bodenstation aus), weitere Stützmessungen sind nicht notwendig.

Da die Kenntnis der geographischen Breite Voraussetzung für das Funktionieren des Beobachters ist, ist auch die Genauigkeit der Beobachtung abhängig von der Genauigkeit der Vorgabe der geographischen Breite.

Die Voraussage der geographischen Breite durch Propagation wird mit zunehmender Zeitdauer durch die Fortpflanzung kleiner Initialisierungfehler und Modellungenauigkeiten an Genauigkeit verlieren. Es wird ein Zeitpunkt eintreten, an dem die Vorgabe der geographischen Breite und somit auch die Beobachtung der geographischen Länge zu ungenau wird, um diese Werte für eine Positionskorrektur verwenden zu können. Die erneute Initialisierung des Propagationsmodells ist erforderlich.

Die Anwendbarkeit des Verfahrens und somit die Dauer der Autonomie ist also beschränkt, voraussichtlich auf einige Wochen. Werden keine anderen Sensoren an Bord zugelassen, so muß eine nachfolgende Autonomiephase durch erneute Vermessung vom Boden aus gestartet werden.

Die nachfolgenden Beschreibungen beziehen sich auf die Möglichkeit der Verwendung von Kreiselmessungen, um die erforderliche Reinitialisierung vom Boden unabhängig zu machen. Das Verfahren ändert sich im Prinzip also nicht, die Kreisel ermöglichen jedoch eine bordautonome Reinitialisierung, welche die Autonomiedauer des nun erweiterten Systems verlängert (keine zeitliche Begrenzung).

Aufgrund der steigenden Komplexität des Systems und der Ungenauigkeit der Kreiselmessungen muß diese zeitliche Unbegrenztheit jedoch mit sinkender Genauigkeit der Bahnbestimmung erkauft werden.

## A2. Erweiterung der Sensorkonfiguration durch Kreisel

Kreisel, in Richtung der Satellitenachsen eingebaut, befinden sich wie der Erd- und Sonnensensor bereits zur Lageregelung an Bord des Satelliten. Die Erweiterung des Verfahrens ist demnach nicht mit steigenden Kosten verbunden, das Vefahren basiert auf einer vorhandenen Sensorkonfiguration.

Die Messungen der Erd/Sonnensensor Konfiguration werden weiterhin durch die Vektorgleichung 4.13 beschrieben:

$$\bar{s}_b - (E - \widetilde{\varphi}_{12})\,\bar{s}_r = (\widetilde{e}_x \beta_{hill} + \widetilde{e}_y \lambda_{hill} - \widetilde{e}_z \psi)\,\bar{s}_r \tag{A2.1}$$

oder

$$\bar{y} = \begin{pmatrix} s_{ry}\psi + s_{rz}\lambda_{hill} \\ -s_{rx}\psi - s_{rz}\beta_{hill} \\ s_{ry}\beta_{hill} - s_{rx}\lambda_{hill} \end{pmatrix} \tag{A2.2}$$

Bisher war es erforderlich, den Gierlagewinkel $\psi$ aus den Gleichungen zu eliminieren, da über ihn keine Informationen zu Verfügung standen. Mit Hilfe der Kreiselmessungen läßt sich nun die Verkopplung der Roll/Gierdynamik des Satelliten nutzen:

$$\dot{\phi} = \omega_0 \cdot \psi + \omega_x$$
$$\dot{\psi} = -\omega_0 \cdot \phi + \omega_z \tag{A2.3}$$

Die Drehraten $\omega_x$ und $\omega_z$ ermitteln sich aus den Kreiselmessungen nach dem folgenden Kreiselmodell:

$$\omega_m = \omega + \delta\omega + n_E$$
$$\delta\dot{\omega} = n_D \tag{A2.4}$$

Dabei handelt es sich bei $\omega_m$ um die gemessene Drehrate um die Einbauachse des Kreisels, bei $\omega$ um die tatsächliche Drehrate, $\delta\omega$ ist eine unbekannte kreiselspezifische Drift und $n_E$ das elektrische weiße Rauschen des Kreisels. Die unbekannte Drift kann dynamisch durch das weiße Driftrauschen $n_D$ beschrieben werden.

Die Roll/Gierdynamik gestützt durch Kreiselmessungen läßt sich demnach im Zustandsraum folgendermaßen darstellen:

$$\begin{pmatrix} \dot{\phi} \\ \dot{\psi} \\ \delta\dot{\omega}_x \\ \delta\dot{\omega}_z \end{pmatrix} = \begin{pmatrix} 0 & \omega_0 & -1 & 0 \\ -\omega_0 & 0 & 0 & -1 \\ 0 & 0 & 0 & 0 \\ 0 & 0 & 0 & 0 \end{pmatrix} \begin{pmatrix} \phi \\ \psi \\ \delta\omega_x \\ \delta\omega_z \end{pmatrix} + \begin{pmatrix} {}_x n_E \\ {}_z n_E \\ {}_x n_D \\ {}_z n_D \end{pmatrix} + \begin{pmatrix} {}_x \omega_m \\ {}_z \omega_m \\ 0 \\ 0 \end{pmatrix} \tag{A2.5}$$

Verwendet man nun zusätzlich die zweite Komponente der Sonnensensormessung (A2.2), die in dem bisher beschriebenen Verfahren nicht benutzt wurde, und ergänzt dies um die Rollwinkelmessung des Erdsensors, so ergibt sich ein vollständig beobachtbares 6-dimensionales System:

$$\begin{pmatrix} \dot{\phi} \\ \dot{\psi} \\ \delta\dot{\omega}_x \\ \delta\dot{\omega}_z \\ \dot{\beta}_{hill} \\ \ddot{\beta}_{hill} \end{pmatrix} = \begin{pmatrix} 0 & \omega_0 & -1 & 0 & 0 & 0 \\ -\omega_0 & 0 & 0 & -1 & 0 & 0 \\ 0 & 0 & 0 & 0 & 0 & 0 \\ 0 & 0 & 0 & 0 & 0 & 0 \\ 0 & 0 & 0 & 0 & 0 & 1 \\ 0 & 0 & 0 & 0 & -\omega_0{}^2 & 0 \end{pmatrix} \begin{pmatrix} \phi \\ \psi \\ \delta\omega_x \\ \delta\omega_z \\ \beta_{hill} \\ \dot{\beta}_{hill} \end{pmatrix} + \begin{pmatrix} 1 & 0 & 0 & 0 & 0 \\ 0 & 1 & 0 & 0 & 0 \\ 0 & 0 & 1 & 0 & 0 \\ 0 & 0 & 0 & 1 & 0 \\ 0 & 0 & 0 & 0 & 0 \\ 0 & 0 & 0 & 0 & 1 \end{pmatrix} \begin{pmatrix} {}_x\omega_m + {}_x n_E \\ {}_z\omega_m + {}_z n_E \\ {}_x n_D \\ {}_z n_D \\ \dfrac{f_y}{m\, a_{geo}} \end{pmatrix} \quad (A2.6)$$

$$\begin{pmatrix} y_1 \\ y_2 \end{pmatrix} = \begin{pmatrix} 1 & 0 & 0 & 0 & 0 & 0 \\ 0 & -s_{rx} & 0 & 0 & -s_{rz} & 0 \end{pmatrix} \begin{pmatrix} \phi \\ \psi \\ \delta\omega_x \\ \delta\omega_z \\ \beta \\ \dot{\beta} \end{pmatrix} + \begin{pmatrix} 1 \\ 1 \end{pmatrix} n_{IRES} \qquad (A2.7)$$

mit $f_y/(m \cdot a_{geo})$ gemäß Gl. 4.8 (die Orbitfrequenz ist hier mit $\omega_0$ bezeichnet anstatt mit $n$). $n_{IRES}$ ist das weiße Rauschen des Erdsensors.

Für dieses System läßt sich erneut ein Beobachter (S. Fig.4) oder ein Kalman-Filter entwerfen, der/das einen Schätzwert für die geographische Breite liefert. Dieser Schätzwert kann als Eingang für das bisher verwendete Verfahren zur Beobachtung der geographischen Länge verwendet werden.

### A3. Beschreibung des Gesamtsystems

Das Gesamtsystem besteht nun aus zwei unabhängigen Untersystemen, die durch die Tatsache verbunden sind, daß der Ausgang von System Nummer 1 als Eingang auf System Nummer 2 geschaltet ist:

System Nummer 1 (S. Fig.4):

- beruht auf Kreiselmessungen um die Roll- und Gierachse
- beruht auf Erdsensormessungen um Roll- und Nickachse
- verwendet 2. Komponente der Meßgleichung A2.2 bzw. 4.13
- Ausgabe: Schätzung der geographischen Breite $\beta_{hill}$

System Nummer 2 (S. Fig. 3):

- beruht auf Erdsensormessungen um Roll- und Nickachse
- verwendet 3. Komponente der Meßgleichung A2.2 bzw 4.13
- verwendet Schätzung der geographischen Breite $\beta$ aus System 1 zur Reduktion der Meßgleichung
- Ausgabe: Schätzung der geographischen Länge $\lambda_{hill}$

System Nummer 2 entspricht dem bisher verwendeten Verfahren, bis auf die Tatsache, daß die geographische Breite durch einen Propagator bereitgestellt wird, der durch Vermessung vom Boden initialisiert werden muß.

In der Umsetzung des Verfahrens kann es aus Gründen des optimalen Entwurfs der Beobachter für die Subsysteme sinnvoll sein, die Systeme mathematisch zu einem einzelnen, großen System zusammenzufassen und einen Komplettentwurf für den Beobachter zu machen. Dies ändert nichts an der prinzipiellen Architektur des Verfahrens.

Auswirkungen der Modifikationen auf Positionsgenauigkeit und Autonmomiedauer

Aufgrund der Erhöhung der Komplexität des Systems im Zusammenspiel mit der Ungenauigkeit der Erdsensor- und Kreiselmessungen sinkt die Genauigkeit der Bahnbestimmung im Vergleich zur propagierten Nord/Süd Bewegung. Dabei muß die Schätzung basierend auf Erd/Sonnensensor/Kreisel Messungen mit der Vermessung der geographischen Breite in Bodenstationen konkurrieren. Diese Genauigkeit kann mit dieser Sensorkonfiguration nicht erreicht werden.

Das vorgestellte modifizierte Vefahren ist demnach ungenauer als das bisher bekannte, ermöglicht aber eine Verlängerung der Autonomiedauer ohne Eingriff vom Boden und quasi ohne zeitliche Begrenzung.

### A4. Kalibrierung

Erd/Sonnensensor Messung:

Am Prinzip der Kalibrierung ändert sich nichts. Wie in Abschnitt 4.5 beschrieben, wirken sich deterministische Fehler in der Sensororientierung (konstante und periodisch zeitabhängige) über einen additiven Fehler k(t) auf die skalaren Meßgrößen der Erd/Sonnensensor Konfiguration aus.

Es existiert demnach für die Erd/Sonnensensor Messung aus System 1 ein $k_{sys1}(t)$ und für die Messung aus System 2 ein $k_{sys2}(t)$, die sich aus den Einflüssen der Orientierungsfehler um die Satellitenachsen zusammensetzen und die exakten Meßwerte verunreinigen.

Wie in 4.5 beschrieben, können diese Funktionen durch Vermessung der Satellitenposition vom Boden aus direkt bestimmt werden. Da die Fehlerfunktionen $k_{sys}(t)$ über mehrere Tage reproduzierbar sind, können sie an Bord des Satelliten gespeichert werden. Während einer Autonomiephase lassen sich die Meßwerte $y_i(t)$ mit Hilfe dieser Funktionen durch einfache Subtraktion

$$y_{cal}(t) = y_i(t)\text{-}y_{sys}(t)$$

bereinigen.

Kreiselmessung:

Die Fehler der Kreiselmessungen (Kreiseldriften) sind bereits im Kreiselmodell A2.4 und in der Dynamik A2.6 enthalten und somit als Zustand im Beobachter mitberücksichtigt. Die Kreisel brauchen folglich nicht a priori kalibriert zu werden.

### A5.

Die hier vorgestellte Erweiterung zu dem in Abschnitt 4.6 beschrieben Gesamtverfahren ist nur als alternative Erweiterung aufzufassen. Die Beschreibung 4.6 ist ein autonomes Verfahren, welches durch sehr hohe Genauigkeit und Zuverlässigkeit gekennzeichnet ist. Dies muß jedoch unter Umständen durch Kontakt mit der Bodenstation, also Unterbrechung der Autonomiephase, erkauft werden, was sich vor allem in Phase 3 wiederspiegelt.

Es mögen Situationen bzw. Anwendungsszenarien vorstellbar sein, die eine Erhöhung der Autonomiezeiten, also eine komplette langfristige Unabhängigkeit von Bodenstationen bei verminderter Genauigkeit der Bahnbestimmung (vergrößertem Satellitenfenster) favorisieren. Denkbar sind z.B. militärische Missionen oder "Save Mode" Missionsabschnitte, in denen der Kontakt zu Bodenstationen vollständig abgebrochen ist.

Diese Leistungmerkmale sind durch eine Modifikation in Phase 2 des Gesamtverfahrens erzielbar. Die out-of-plane Bewegung wird nicht ausschließlich propagiert, sondern in einem Beobachter geschätzt, der durch Kreiselmessungen und Erd/Sonnensensor Messungen gestützt wird und keiner Vorabinformation über die Position des Satelliten bedarf.

Die (nichtautonome) Vermessung der geographischen Breite des Satelliten zur Initialisierung des Propagators von einer Bodenstation aus wird also durch die autonome Beobachtung der Breite mit Hilfe von Erd/Sonnensensor/ Kreisel Messungen ersetzt. Dadurch kann in Phase 3 die Überwachung und der Eingriff der Bodenstation wegfallen.

Zu dem in Fig. 4 dargestellten Beobachter ist noch folgendes zu bemerken: Die Systemmatrix $A_1$ ist mit der dem Zustandsvektor auf der rechten Seite der Gleichung (A2.6.) zugeordneten Matrix identisch. Dieser Zustandsvektor ist sechsdimensional und enthält als Komponenten den Rollwinkel $\Phi$, den Gierwinkel $\Psi$, die x-Komponente der Kreiseldrift $\delta\omega$, die entsprechende z-Komponente, die Breitenabweichung $\beta$ der Satellitenposition sowie deren erste zeitliche Ableitung. Die Eingangsmatrix $B_1$ ergibt sich aus der dem ganz rechts in Gleichung (A2.6) stehenden Störvektor zugeordneten Matrix durch Streichung von deren dritter und vierter Spalte, da im Beobachter die in der 2.und 3. Komponente dieses Störvektors enthaltenen statistischen Größen (unkorreliertes Rauschen) nicht berücksichtigt werden. Die Meßmatrix $C_1(t)$ ist mit der auf der rechten Seite der Gleichung (A2.7) dem dortigen Zustandsvektor zugeordneten Matrix identisch. Die Beobachterverstärkung $L_1(t)$ kann nach jeweils zweckmäßigen, dem Fachmann geläufigen Kriterien gewählt werden.

Der Beobachter gemäß Fig. 4 erzeugt am Ausgang des Integrators den in Gleichung (A2.6) angegebenen, sechsdimensionalen Zustandsvektor. Dessen zwei letzte Komponenten, nämlich $\beta$ sowie $\dot{\beta}$ werden nun dem Beobachter gemäß Fig. 3 zugeführt. Sie werden dort als Anfangswerte des Integrators gesetzt, und zwar selbstverständlich für die entsprechenden ersten zwei Komponenten des dort zu schätzenden Zustandsvektors $\hat{x}(t)$. Die übrigen Anfangswerte für die verbleibenden vier Komponenten dieses Zustandsvektors können, falls sie nicht bekannt sind, auf Null gesetzt werden. Diese anfängliche Ungenauigkeit wird mit der Zeit ausgeglichen, und zwar mittels der über die Beobachterverstärkung 1(t) hinsichtlich dieser Komponenten wirkenden Korrektur. Stehen keine Kreiselmessungen zur Verfügung, so müssen die Anfangswerte für $\beta$ sowie dessen zeitliche Ableitung $\dot{\beta}$ von der Bodenstation her gesetzt werden.

Bei den in Gleichung (4.15) neben den beiden Sonnenvektoren auftretenden Vektoren handelt es sich um die beiden vom Satelliten auf den Erdmittelpunkt weisenden Erdvektoren, bezogen auf das satellitenfeste Koordinatensystem (Index b) sowie auf das Referenzsystem (Index r).

Um Mißverständnisse zu vermeiden, sei ferner darauf hingewiesen, daß die Komponente $y_1$ auf der linken Seite der Gleichung (A2.7) nicht mit der ersten Komponente des durch Gleichung (A2.2) gegebenen Vektors identisch ist. Die Benennung in (A2.7) ist aus rein formalen Gründen so gewählt worden. Hingegen ist die Komponente $y_2$ aus (A2.7) mit der zweiten Komponente aus (A2.2) identisch, ebenso wie die Größe y aus (4.16) mit der dritten Komponente aus (A2.2).

Bei der Größe m in Gleichung (4.4) handelt es sich um die Satellitenmasse.

Die Größen $\alpha$ sowie $\alpha_s$ in Gleichung (4.17) entsprechen den folgenden Größen aus Gleichung (4.9): $\alpha = nt$, $\alpha_s = nt_{s0}$.

Alternativ können die Schätzwerte der Breitenabweichung $\beta$ zur Reduktion des in Anspruch 1 beschriebenen Meßwertes y(t) herangezogen werden, so daß der auschließlich von der Längenabweichung $\lambda$ abhängige resultierende Meßwert Einzug in einen Beobachter findet, der auf einem um die Breitenabweichung und deren zeitlichen Ableitung reduzierten Zustand basiert.

In diesem Fall ändern sich die Komponenten des Beobachters in Fig. 3 wie folgt:

| | |
|---|---|
| Zustand x(t) | Streichen der ersten beiden Komponenten. |
| Eingangsmatrix B | Streichen der zweiten Spalte und der ersten und zweiten Zeile. |
| Dynamikmatrix A | Streichen der ersten und zweiten Zeile und Spalte. |
| Beobachterverstärkung 1(t) | Streichen der ersten beiden Komponenten. |
| Meßvektor c(t) | Streichen der ersten beiden Komponenten. |

## Referenzen

[1] P.Maute, B.Blancke, J.Ph.Jehallier, F.Alby

Autonomous Geostationary Station Keeping System Optimization and Validation,
IAF-88-327, 39.Congress of the International Astronautical Federation,
1988, Bangalore, India.

[2] J.Potti, E.J. Mora

On-Board Autonomous Station Keeping (OBASK)
Executive Summary, ESTEC Contract No.9675/91/NL/JG
GMVSA 2064/93, GMV S.A. 1993

[3] K.D.Mease, M.S.Ryne, L.J.Wood

An Approach to Autonomous On-Board Orbit Determination
The Journal ofthe Astronautical Sciences, Vol.33, No.2, pp163-178, 1985

## Patentansprüche

**1.** Verfahren zur bordautonomen Bestimmung der Position eines auf einer Erdumlaufbahn befindlichen Satelliten, der einen zweiachsig messenden Erdsensor und eine zweiachsig messende Sonnensensoranordnung zur Bestimmung der auf ein satellitenfestes Koordinatensystem bezogenen Erd-bzw. Sonnenrichtung aufweist,

unter Verwendung eines die Bahndynamik des Satelliten sowie die auf ihn wirkenden Stör- und Manöverbeschleunigungen modellierenden Beobachters zur Schätzung eines Zustandsvektors x(t), dessen Komponenten durch die Abweichungen ($\lambda$, $\beta$, r) der momentanen Bahnposition des Satelliten bezüglich der gewünschten Bahnposition in drei zueinander orthognalen Koordinatenrichtungen (x, y, z) eines bahnbezogenen Koordinatensystems sowie deren zeitliche Ableitungen ($\dot\lambda$, $\dot\beta$, $\dot r$,) gebildet werden,

wobei zwei dieser Abweichungen (Längenabweichung $\lambda$, radiale Abweichung r) in der Bahnebene liegen und die dritte (Breitenabweichung $\beta$) senkrecht zur Bahnebene orientiert ist

und wobei ein die Differenz von nominalem und aus den Sensormessungen ($\bar\varphi_{12}$, $\bar s_b$) abgeleitetem Winkel zwischen Erd- und Sonnenrichtung repräsentierender Meßwert y(t) in den Beobachter eingeführt und zur Korrektur lediglich derjenigen Komponenten ($\lambda$,$\dot\lambda$,r,$\dot r$) des Zustandsvektors x(t) herangezogen wird, die den in der Bahnebene liegenden Abweichungen ($\lambda$, r) zugeordnet sind.

**2.** Verfahren nach Anspruch 1, wobei zur Berücksichtigung von Ungenauigkeiten hinsichtlich der relativen Orientierung der Sensoren der in den Beobachter einzuführende Meßwert y(t) mit einer Kalibrierungsfunktion k(t) korrigiert wird, die als Differenz aus dem realen Meßwert y(t) und einem entsprechenden errechneten Wert gebildet wird, in den die auf andere Weise, beispielsweise durch Messungen von einer Bodenstation aus, ermittelten Abweichungen ($\beta$, $\lambda$) eingehen.

**3.** Verfahren nach Anspruch 1 oder 2, **dadurch gekennzeichnet,** daß

-  zusätzlich mit Hilfe von Kreiselmessungen die Verkopplung der Roll-Gier-Kinematik des Satelliten über seine Bahnumlauffrequenz ($\omega_0$) genutzt wird,

-  wobei ein zusätzlicher, die Roll-Gier-Kinematik, das Kreiselverhalten sowie die Bahndynamik senkrecht zur Bahnebene modellierender Beobachter zur Schätzung eines Zustandsvektors verwendet wird, dessen Komponenten durch Roll- und Gierwinkel ($\Phi$, $\Psi$) des Satelliten, Roll- und Gierkomponenten der Kreiseldrift ($\delta\omega_x$, $\delta\omega_z$) sowie die Breitenabweichung ($\beta$) der Satellitenposition und deren zeitliche Ableitung ($\dot\beta$) gebildet werden

-  und wobei in den Beobachter aus den Sensor- und Kreiselmessungen gewonnene Meßwerte ($\Phi$, $y_2$, $_x\omega_m$, $_z\omega_m$) eingeführt werden.

**4.** Verfahren nach Anspruch 3, **dadurch gekennzeichnet,** daß die Schätzwerte für die Breitenabweichung $\beta$ und deren zeitliche Ableitung in den Beobachter zur Schätzung des Zustandsvektors x(t) eingeführt und dort zur Setzung der Anfangswerte eines die zeitliche Ableitung dieses Zustandsvektors aufnehmenden Integrators dient.

## Claims

**1.** Method for the autonomous on-board determination of the position of a satellite which is in an earth orbit and which has a biaxially measuring earth sensor and a biaxially measuring sun sensor arrangement for determining the earth and sun direction, respectively, which is related to a satellite-based coordinate system,

using an observer modelling the orbital dynamics of the satellite and also the disturbance accelerations and manoeuvre accelerations acting on the satellite, to estimate a state vector x(t) whose components are formed by the deviations ($\lambda$, $\beta$,r) of the instantaneous orbital position of the satellite relative to the desired orbital position in three mutually perpendicular coordinate directions (x, y, z) of an orbit-related coordinate system and also by the time derivatives ($\dot\lambda$, $\dot\beta$, $\dot r$,) thereof,

wherein two of those deviations (length deviation $\lambda$, radial deviation r) lie in the orbital plane and the third (width deviation $\beta$) is oriented perpendicularly to the orbital plane

and wherein a measured value y(t), representing the difference between the nominal angle between the earth and sun direction and the angle between the earth and sun direction derived from the sensor measurements

$(\bar{\varphi}_{12}, \bar{s}_b)_x$, is introduced into the observer and is used to correct only those components $(\lambda, \dot{\lambda}, r, \dot{r},)$ of the state vector x(t) which are associated with the deviations ($\lambda$, r) lying in the orbital plane.

2.  Method according to claim 1, wherein, in order to take into account inaccuracies with regard to the relative orientation of the sensors, the measured value y(t) to be introduced into the observer is corrected with a calibration function k(t) which is formed as a differential from the real measured value y(t) and a corresponding calculated value into which the deviations ($\beta, \lambda$) ascertained in another manner, for example by measurements from an earth station, are introduced.

3.  Method according to claim 1 or 2, characterised in that

    -   in addition, with the aid of gyroscopic measurements, the coupling of the rolling-yawing kinematics of the satellite is used by means of its orbit frequency ($\omega_0$),

    -   an additional observer which models the rolling-yawing kinematics, the gyroscopic behaviour and the orbital dynamics perpendicular to the orbital plane being used to estimate a state vector whose components are formed by rolling and yawing angles ($\Phi$, $\Psi$) of the satellite, rolling and yawing components of the gyroscopic drift ($\delta\omega_x$, $\delta\omega_z$) and the width deviation ($\beta$) of the satellite position and the time derivative ($\dot{\beta}$) thereof

    -   and measured values ($\Phi$, $y_2$, $_x\omega_m$, $_z\omega_m$) obtained from the sensor measurements and gyroscopic measurements being introduced into the observer.

4.  Method according to claim 3, characterised in that the estimated values for the width deviation $\beta$ and the time derivative thereof are introduced into the observer for estimating the state vector $\underset{\sim}{x}$(t) and are used there to set the initial values of an integrator receiving the time derivative of that state vector.


**Revendications**

1.  Procédé destiné à la détermination autonome à bord de la position d'un satellite se trouvant sur une orbite terrestre, qui comporte un capteur de terre mesurant suivant deux axes et un dispositif de captage du soleil mesurant suivant deux axes pour la détermination de la direction de la terre et du soleil rapportée à un système de coordonnées propre au satellite,

    avec utilisation d'un observateur modélisant la dynamique de l'orbite du satellite, ainsi que les accélérations de perturbations et de manoeuvres agissant sur lui, destiné à l'estimation d'un vecteur d'état $\underset{\sim}{x}$(t) dont les composantes sont formées par les écarts ($\lambda$, $\beta$, r) de la position momentanée de l'orbite du satellite par rapport à la position souhaitée de l'orbite dans trois directions de coordonnées orthogonales (x, y, z) d'un système de coordonnées rapporté à l'orbite, ainsi que par leurs dérivées dans le temps ($\dot{\lambda}$, $\dot{\beta}$, $\dot{r}$),
    deux de ces écarts (écart longitudinal $\lambda$, écart radial r) étant situés dans le plan de l'orbite, et le troisième (écart de largeur $\beta$) étant orienté perpendiculairement au plan de l'orbite,
    et une valeur de mesure y(t), représentant la différence d'angles nominaux et d'angles dérivés des mesures $(\bar{\varphi}_{12}, \bar{s}_b)_x$ des capteurs entre la direction de la terre et celle du soleil, étant entrée dans l'observateur, et étant utilisée pour la correction des seules composantes ($\lambda$, $\dot{\lambda}$, r, $\dot{r}$) du vecteur d'état $\underset{\sim}{x}$(t) qui sont associées aux écarts ($\lambda$, r) situés dans le plan de l'orbite.

2.  Procédé suivant la revendication 1, dans lequel, pour tenir compte d'imprécisions concernant l'orientation relative des capteurs, la valeur de mesure y(t) à entrer dans l'observateur est corrigée avec une fonction d'étalonnage k (t), qui est formée en tant que différence issue de la valeur de mesure y(t) réelle et d'une valeur calculée correspondante, dans laquelle sont pris en compte les écarts ($\beta$, $\lambda$) déterminés d'une autre manière, par exemple par des mesures d'une station au sol.

3.  Procédé suivant la revendication 1 ou 2, caractérisé en ce que,

    -   le couplage de la cinématique du roulis et du lacet du satellite sur sa fréquence orbitale ($\omega_0$) est en outre utilisé à l'aide de mesures gyroscopiques,
    -   un observateur supplémentaire, qui modélise la cinématique du roulis et du lacet, le comportement des gyroscopes, ainsi que la dynamique de l'orbite perpendiculairement au plan de l'orbite, est utilisé pour l'estimation d'un vecteur d'état dont les composantes sont formées par des angles de roulis et de lacet ($\Phi$, $\psi$) du satellite, de composantes du roulis et du lacet de la dérive des gyroscopes ($\delta\omega_x$, $\delta\omega_z$), ainsi que par l'écart de largeur ($\beta$) de la position du satellite et par sa dérivée dans le temps ($\dot\beta$),

- et des valeurs de mesure ($\Phi$, $y_2$, $_x\omega_m$, $_z\omega_m$) obtenues par les mesures des capteurs et des gyroscopes sont entrées dans l'observateur.

4. Procédé suivant la revendication 3, caractérisé en ce que les valeurs d'estimation pour l'écart de largeur $\beta$ et sa dérivée dans le temps sont entrées dans l'observateur pour l'estimation du vecteur d'état $\hat{x}(t)$, et sont utilisées dans celui-ci pour la composition des valeurs initiales d'un intégrateur recevant la dérivée dans le temps de ce vecteur d'état.

Fig.1

Fig.2

Frühlingspunkt

**Fig. 3**

**Fig. 4**